# EUROPÄISCHE PATENTSCHRIFT

(11) **EP 0 868 407 B1**
(45) Veröffentlichungstag und Bekanntmachung des Hinweises auf die Patenterteilung: **02.04.2003**
(21) Anmeldenummer: 96946242.3
(22) Anmeldetag: 18.12.1996
(51) Int. Cl.: C04B 24/26, C04B 28/02, C04B 40/00

(54) **DISPERSIONEN UND DEREN EINSATZ IN BETONMISCHUNGEN**
DISPERSIONS AND THE USE THEREOF IN CONCRETE MIXTURES
DISPERSIONS ET LEUR UTILISATION DANS DES MELANGES DE BETON

(30) Priorität: 22.12.1995 DE 19549294
(43) Veröffentlichungstag der Anmeldung: 07.10.1998
(73) Patentinhaber: Bauer, Wulf, 50968 Köln (DE)
(72) Erfinder: THÖNE, Gerd, D-32105 Bad Salzuflen (DE)
(74) Vertreter: Bauer, Wulf, Dr.
(86) Internationale Anmeldenummer: DE9602439
(87) Internationale Veröffentlichungsnummer: WO97023433

(56) Entgegenhaltungen:
- EP-A- 0 460 744
- GB-A- 1 218 136
- US-A- 4 261 755
- US-A- 4 851 456
- US-A- 5 244 304
- DATABASE WPI Section Ch, Week 8528 Derwent Publications Ltd., London, GB; Class A93, AN 85-167828 XP002032536 & JP 60 096 559 A (JAPAN SYNTHETIC RUBBER CO LTD & TAISEI CONS KK) , 30.Mai 1985
- CHEMICAL ABSTRACTS, vol. 109, no. 16, 17.Oktober 1988 Columbus, Ohio, US; abstract no. 134095n, XP000158459 & CS 247 284 A (Z.ZLANCKA) 15.Januar 1988
- DATABASE WPI Section Ch, Week 9704 Derwent Publications Ltd., London, GB; Class A82, AN 97-041004 XP002032537 & RU 2 055 821 C (MTSK STOCK CO) , 10.März 1996
- DATABASE WPI Section Ch, Week 8129 Derwent Publications Ltd., London, GB; Class A93, AN 81-52452D XP002032538 & JP 56 063 855 A (DANTO KK) , 30.Mai 1981
- DATABASE WPI Section Ch, Week 7844 Derwent Publications Ltd., London, GB; Class A14, AN 78-79008A XP002032539 & JP 53 110 641 A (KURARAY CO LTD) , 27.September 1978

## Beschreibung

Die vorliegende Erfindung betrifft eine Betonmischung, deren Schwinden beim Aushärten reduziert ist, deren Flexibilität nach dem Aushärten erhöht ist und mit der es möglich ist, Füllstoffe in der Betonmischung zu verwenden, die bisher als Zementgifte galten.

Im Zuge der zunehmenden Industrialisierung in vielen Ländern der Welt und einem sich ständig steigernden Mobilitätsbedürfnis der Menschen, kommt dem Straßen- und Wegebau eine immer größere Bedeutung zu.

Das gängigste Straßenbaumaterial ist Bitumen. Bitumen hat den Vorteil, daß es flexibel genug ist um mit dem Untergrund etwas mitzugehen, so daß die damit gebauten Straßen keine Risse und/oder Kantenvorsprünge bekommt. Darüber hinaus erweist sich ein Bitumenbelag als ausgesprochen abriebfest, so daß Straßen mit einem Bitumenbelag lange halten.

Der Nachteil von Bitumen ist sein hoher Preis und die mangelnde Verfügbarkeit dieses Erdölderivats in vielen Teilen der Erde. Zusätzlich ist Bitumen aufgrund seiner mangelnden Hitzebeständigkeit in vielen Ländern der südlichen und fernöstlichen Hemisphäre ein für den Straßenbau nicht geeignetes Baumaterial.

Ein zum Bitumen alternatives Straßenbaumaterial ist der Beton. Beton ist ein im Vergleich zu Bitumen wesentlich preiswerteres Material und die für eine Betonmischung benötigten Materialien Zement, Wasser und ein Füllstoff wie zum Beispiel Sand sind in weiten Teilen der Erde zumindestens leichter Verfügbar als Bitumen. Zusätzlich wird Beton auch bei extremer Sonneneinstrahlung nicht weich.

Um Straßen aus Beton bauen zu können, muß der Untergrund unter einer Betonplatte sehr fest sein. Andernfalls zerbrechen Betonplatten entweder oder sie setzen sich lokal, so daß es zu Kantenvorsprüngen kommt, die sowohl für die Automobile als auch für deren Fahrer eine extreme Belastung darstellen.

Die Verfestigung des Untergrunds ist ein sehr aufwendiges Verfahren, bei dem in der Regel der gewachsene Untergrund durch ein verdichtbares Material wie zum Beispiel Sand ersetzt werden muß.

Dieses Problem tritt nicht nur beim Straßenbau sondern ganz generell in der Bauindustrie, die Beton verarbeitet, auf.

Es hat deshalb nicht an Versuchen gefehlt Beton mit Zusatzstoffen so flexibel zu machen, daß er möglichst die Flexibilität von Bitumen erreicht.

Aus AU-A-35121/93 ist zum Beispiel ein Stoffgemisch bekannt, das einer Betonmischung zugesetzt wird, um deren Flexibilität zu erhöhen und deren Schwinden während des Aushärtens zu reduzieren. Das Stoffgemisch besteht hauptsächlich aus zwei Komponenten, wovon die eine Komponente vorwiegend aus Chloridsalzen besteht und die andere Komponente ein Alkalisilikat (Wasserglas), vorzugsweise Natriumsilikat, ist. Die beiden Komponenten werden vorgemischt und dann der Betonmischung aus Zement, Wasser und Sand zugemischt, um sie dann zum Beispiel zum Straßenbau zu verwenden.

Dieses Verfahren hat den Nachteil, daß die beiden Komponenten des Stoffgemisches schon während des Vormischens miteinander reagieren und das Silikat bereits erhärtet, bevor es mit der Betonmischung in Kontakt kommt, so daß die eigentliche Wirkung dieses Stoffgemisches in dem Betongemisch begrenzt ist.

Darüber hinaus ergeben sich noch einige Probleme dadurch, daß Wasserglas als gefährliche Substanz eingestuft wird und deshalb nur unter Verwendung von Handschuhen, einer Schutzbrille und einer Schürze verarbeitet werden darf und entsprechende Sicherheitsvorkehrungen bei dessen Transport getroffen werden müssen.

Weiterhin ist aus der EP-A-460 744 eine Mörtelzusammensetzung bekannt, die mittels einer polymerischen Dispersion zubereitet wird. Die aus der Mörtelzusammensetzung hergestellten Substrate weisen eine hohe Elastizität auf und widerstehen im praktischen Einsatz starken Vibrationen und Verbiegungen. Jedoch enthält die Mörtelzusammensetzung einen hohen Polymeranteil (bis zu 30 Gewichts-%), so dass sie im Vergleich zu Bitumen nicht kostengünstig zuzubereiten ist. Weiterhin verbietet die hohe Flexibilität der aus dieser Mörtelzusammensetzung gefertigten Substrate ihre Verwendung im Strassenbau.

Schliesslich ist auch aus der japanischen Patentanmeldung mit der Anmeldenummer 85-167828 eine polymerhaltige Zementmischung bekannt, die nach dem Aushärten verbesserte elastische Eigenschaften aufweist und zur Verwendung als hitzebeständiges elastisches Füllmaterial geeignet ist. Jedoch ist auch diese Zementmischung aufgrund ihres hohen Polymeranteils nicht zur Verwendung im Strassenbau geeignet.

Es stellte sich deshalb die Aufgabe, eine ungefährliche, für die Umwelt unbedenkliche Betonmischung zu finden, welcheein reduziertes Schwinden beim Aushärten und eine erhöhte Flexibilität des Betons nach dem Aushärten aufweist, so dass die Betonmischung für die Verwendung im Strassen- und Wegebau geeignet ist.

Die Aufgabe wird erfindungsgemäß durch die Bereitstellung einer Betonmischung gelöst, die enthält:
i) 0,01-0,5 l, vorzugsweise 0,05-0,15 l einer wässrigen Dispersion pro kg Zement mit der folgenden Zusammensetzung:
   a.) 83,0-96,0 Gew.-%, bezogen auf das Gesamtgewicht der Dispersion, Wasser,
   b.) 1,0-6,0 Gew.-%, bezogen auf das Gesamtgewicht der Dispersion, eines 30-70 Gew.-%-igen wässrigen, synthetischen Latex,
   c.) gegebenenfalls 1,0-7,2 Gew.-%, bezogen auf das Gesamtgewicht der Dispersion, eines Erdalkalimetallformiates, vorzugeweise Kalciumformiat,
   d.) gegebenenfalls 0,2-1,2 Gew.-%, bezogen auf das Gesamtgewicht der Dispersion, eines Celluloseäthers,
   e.) 0,02-0,12 Gew.-%, bezogen auf das Gesamtgewicht der Dispersion, Laurylsulfonat,
   f.) gegebenenfalls 0,6-1,2 Gew.-%, bezogen auf das Gesamtgewicht der Dispersion, eines üblichen Konservierungsmittels,
   g.) gegebenenfalls 0,25-0,6 Gew.-%, bezogen auf das Gesamtgewicht der Dispersion, eines üblichen Entschäumers,
   h.) gegebenenfalls, 0,2-1,0 Gew.-%, bezogen auf das Gesamtgewicht der Dispersion, einer, vorzugesweise 50-60 Gew.-%-igen, wässrigen Paraffinemulsion, wobei das Gesamtgewicht aus allen Komponenten der Dispersion 100 Gew.-% ergeben muß,
ii) Zement,
iii) Füllstoff, und
iv) gegebenenfalls Wasser,
wobei die Betonmischungskomponenten ii), iii) und iv) in üblichen Mengen eingesetzt werden. Ein weiterer Gegenstand der Erfindung ist der entsprechend ausgehärtete Beton.

Bevorzugt enthält die wässrige Dispersion nach i):
- 85,0-90,0 Gew.-%, der Komponente a,
- 2,0-5,0 Gew.-%, der Komponente b,
- gegebenenfalls 2,0-6,0 Gew.-%, der Komponente c,
- gegebenenfalls 0,3-1,0 Gew.-%, der Komponente d,
- 0,03-0,08 Gew.-%, der Komponente e,
- gegebenenfalls 0,8-1,0 Gew.-%, der Komponente f,
- gegebenenfalls 0,3-0,5 Gew.-%, der Komponente g,
- gegebenenfalls 0,5-0,8 Gew.-%, der Komponente h,
wobei das Gesamtgewicht aus allen Komponenten der Dispersion 100 Gew.-% ergeben muß.

Bevorzugt wird als synthetischer Latex ein Poly-Styrol-Butadien Copolymerlatex, als Erdalkalimetallformiat Kalciumformiat und als Konservierungsmittel 2-n-Octyl-4-Isothiazolinon-3-one gelöst in Propylenglykol eingesetzt.

Die erfindungsgemäße Betonmischung wird vorzugsweise dadurch hergestellt, daß der Zement, der Füllstoff und gegebenenfalls das Wasser miteinander vermischt werden und danach die wässrige Dispersion hinzugefügt wird. Jede andere Reihenfolge der Vermischung der Komponenten ist auch möglich.

Ein weiterer Gegenstand der Erfindung ist die Herstellung von Baumaterialien, vorzugsweise Platten oder Steinen, aus der erfindungsgemäßen Betonmischung.

Die erfindungsgemäße Betonmischung kann weiterhin zu jeder Art von Betonbau, vorzugsweise zum Straßen-, Wegebau und Befestigungsbau, eingesetzt werden, so daß ein weiterer Gegenstand der Erfindung diese Verwendung und die entsprechenden Betonbauten, vorzugsweise Straßen-, Wege-, und andere Befestigungsbeläge oder -bauten sind.

Mit der erfindungsgemäßen Betonmischung, basierend auf der wässrigen Dispersion nach i), lassen sich folgende Vorteile erzielen:
- Einer Betonmischung muß nur ein Hilfsstoff zugegeben werden, der nicht vorgemischt werden muß, um den Beton flexibler zu machen den Schwund beim Aushärten zu reduzieren. Dadurch reduzieren sich Fracht- und Lagerkosten.
- Die wässrige Dispersion ist nicht als gefährlicher Stoff klassifiziert, so daß sie ohne Schutzmaßnahmen verarbeitet werden kann.
- Die wässrige Dispersion ist unbedenklich für die Umwelt.
- Eine erfindungsgemäße Betonmischung härtet sehr schnell aus.
- Mit der wässrigen Dispersion ist es möglich, eine erfindungsgemäße Betonmischung mit Füllstoffen herzustellen, die bisher als Zementgifte galten.
- Als Füllstoff in der Betonmischung können die üblichen Sande, darüber hinaus aber auch jede Art von Boden, kontaminiert oder unkontaminiert, und/oder Materialien wie Bauxit, Laterit, Vulkanasche, Bims und Asche aus Verbrennungsanlagen eingesetzt werden.
- Wenn der Wasseranteil des Füllstoffs ausreicht, um den Wasserbedarf der erfindungsgemäßen Betonmischung zu decken, muß der erfindungsgemäßen Betonmischung kein Wasser zugesetzt werden.
- Mit der erfindungsgemäßen Betonmischung können Baumaterialien und Betonbauteilen jeglicher Art, vorzugsweise Straßen- und Wegebeläge hergestellt werden, indem der Aushub der Baustelle und/oder sand- oder bodenartige Materialien, die im Baustellenbereich verfügbar sind, an Stelle der üblichen Füllstoffe als Füllstoff in der Betonmischung verwendet werden.

### Beispiele:

### Beispiel 1

Um zu überprüfen, inwieweit sich die mechanischen Eigenschaften, insbesondere die Elastizität und das Schwindverhalten eines erfindungsgemäßen Betons durch Zugabe der wässrigen Dispersion nach i) verändert worden sind und inwieweit die Schwindung des Betongemisches reduziert werden konnte, wurde ein Versuch mit und ohne wässrige Dispersionszugabe durchgeführt.

Zunächst wurde eine Betonmischung hergestellt, die wie folgt zusammengesetzt war:
- 20 kg Zement,
- 100 l Sand und
- 5 Liter Wasser.

Danach wurde diese Betonmischung im Verhältnis 1:1 geteilt und in zwei getrennte Bottiche gefüllt.

Die eine Betonmischung wurde so belassen wie sie war, während die andere Betonmischung mit einem Liter der wässrigen Dispersion nach
i) vermischt wurde, die folgendermaßen zusammengesetzt war:
   a.) 87,6 Gew.-%, bezogen auf das Gesamtgewicht der Dispersion, Wasser,
   b.) 4,0 Gew.-%, bezogen auf das Gesamtgewicht der Dispersion, eines 50 Gew.-%-igen wässrigen, synthetischen Styrol/Butadien Latex,
   c.) 5,0 Gew.-%, bezogen auf das Gesamtgewicht der Dispersion, Kalciumformiat,
   d.) 1,0 Gew.-%, bezogen auf das Gesamtgewicht der Dispersion, Celluloseäthers,
   e.) 1,0 Gew.-%, bezogen auf das Gesamtgewicht der Dispersion, 2-n-Octyl-4- Isothiazolinon-3-one gelöst in Propylenglykol,
   f) 0,39 Gew.-%, bezogen auf das Gesamtgewicht der Dispersion, Polydimethylsiloxan,
   g) 0,01 Gew.-%, bezogen auf das Gesamtgewicht der Dispersion, Laurylsulfonat,
   h) 1,0 Gew.-%, bezogen auf das Gesamtgewicht der Dispersion, einer 60 Gew.-%-igen wässrigen Paraffinemulsion.

Anschließend wurden die erfindungsgemäße Betonmischung und die konventionelle Betonmischung jeweils in Holzformen mit den Maßen 50x20x1 cm (Länge; Breite; Tiefe) gegossen, worin die Betonmischung jeweils aushärtete. Es wurden jeweils 10 Platten hergestellt.

Eine visuelle Beurteilung der Betonplatten ergab, daß die erfindungsgemäßen Betonplatten weniger geschwunden waren als die konventionellen Betonplatten.

Danach wurden jeweils 10 Betonplatten in einer Prüfmaschine an der einen Breitseite fest eingespannt und an der anderen Breitseite, 45 cm von der Einspannstelle entfernt, mit einem hydraulischen Stempel so lange zunehmend belastet, bis sie brachen. Während dieses Versuches wurde jeweils die Verformung der Betonplatte optisch vermessen.

Es zeigte sich, daß die erfindungsgemäßen Betonplatten durchschnittlich eine 2,5-fach größere Verformbarkeit vor Bruch aufwiesen.

### Beispiel 2:

Wie bereits oben erwähnt, ist es mit der erfindungsgemäßen Betonmischung möglich, Substanzen als Füllstoff einzusetzen, die bisher als Zementgifte galten.

Um dies zu illustrieren, wurden drei Betonmischungen hergestellt, die jeweils 20 kg Zement und 5 Liter Wasser enthielten. Als Füllstoff enthielt Mischung 1 100 Liter handelsüblichen Bausand, Mischung 2 100 Liter Mutterbodenaushub von einer Baustelle und Mischung 3 100 Liter Asche aus einer Verbrennungsanlage.

Die Betonmischungen wurden jeweils in einer Betonmischmaschine innig vorgemischt und dann jeweils in einem Bottich mit einem Liter der wässrigen Dispersion gemäß Beispiel 1 vermischt und in die in Beispiel 1 beschriebenen Formen zu Platten gegossen, in denen die Betonmischungen aushärteten.

Eine visuelle Beurteilung von jeweils 10 der Betonplatten ergab, daß die Schwindung der Betongemische während des Aushärtens in allen Fällen gering war.

Danach wurden die Platten unterschiedlichsten mechanischen Prüfverfahren wie zum Beispiel Druckfestigkeit, Verformbarkeit und Oberflächenhärte unterworfen, wobei es sich zeigte, daß die mechanischen Eigenschaften von allen Betonplatten vergleichbar gut waren.

## Patentansprüche

1. Betonmischung für den Straßen- oder Wegebau, enthaltend:
i) 0,01-0,5 Liter, vorzugsweise 0,05-0,15 Liter einer Dispersion pro kg Zement mit der folgenden Zusammensetzung:
a) 83,0-96,0 Gew.-%, bezogen auf das Gesamtgewicht der Dispersion, Wasser,
b) 1,0-6,0 Gew.-%, bezogen auf das Gesamtgewicht der Dispersion, eines 30-70 Gew.-%-igen wässrigen, synthetischen Latex,
c) 1,0-7,2 Gew.-%, bezogen auf das Gesamtgewicht der Dispersion, eines Erdalkalimetallformiates, vorzugsweise Kalciumformiat,
d) gegebenenfalls 0,2-1,2 Gew.-%, bezogen auf das Gesamtgewicht der Dispersion, eines Celluloseäthers,
e) 0,02-0,12 Gew.-%, bezogen auf das Gesamtgewicht der Dispersion, Laurylsulfonat,
f) gegebenenfalls 0,6-1,2 Gew.-%, bezogen auf das Gesamtgewicht der Dispersion, eines üblichen Konservierungsmittels,
g) gegebenenfalls 0,25-0,6 Gew.-%, bezogen auf das Gesamtgewicht der Dispersion, eines üblichen Entschäumers,
h) gegebenenfalls, 0,2-1,0 Gew.-%, bezogen auf das Gesamtgewicht der Dispersion, einer 50-60 Gew.-%-igen wässrigen Paraffinemulsion,
wobei das Gesamtgewicht aus allen Komponenten der Dispersion 100 Gew.-% ergeben muss,
ii) Zement,
iii) Füllstoff und
iv) gegebenenfalls Wasser.

2. Betonmischung gemäß Anspruch 1, enthaltend:
• 85,0-90,0 Gew.-%, der Komponente a,
• 2,0-5,0 Gew.-%, der Komponente b,
• 2,0-6,0 Gew.-%, der Komponente c,
• gegebenenfalls 0,3-1,0 Gew.-%, der Komponente d,
• 0,03-0,08 Gew.-%, der Komponente e,
• gegebenenfalls 0,8-1,0 Gew.-%, der Komponente f,
• gegebenenfalls 0,3-0,5 Gew.-%, der Komponente g,
• gegebenenfalls 0,5-0,8 Gew.-%, der Komponente h,
wobei das Gesamtgewicht aus allen Komponenten der Dispersion 100 Gew.-% ergeben muss.

3. Betonmischung gemäß Ansprüchen 1 oder 2, **dadurch gekennzeichnet, dass** als synthetischer Latex ein Poly-Styrol-Butadien Latex, und als Konservierungsmittel 2-n-Octyl-4-lsothiazolinon-3-one gelöst in Propylenglykol eingesetzt werden.

4. Betonmischung gemäß Anspruch 1, **dadurch gekennzeichnet, dass** als Füllstoff jede Art von Sand, jede Art von Boden, kontaminiert oder unkontaminiert, und/oder Materialien wie Bauxit, Laterit, Vulkanasche, Bims und Asche aus Verbrennungsanlagen eingesetzt werden können.

5. Betonmischung gemäß Ansprüchen 1 oder 4, **dadurch gekennzeichnet, dass** als Füllstoff ein feuchter Füllstoff und entsprechend dem Feuchtigkeitsgehalt wenig oder kein Wasser eingesetzt wird.

6. Verwendung der Betonmischung gemäß den Ansprüchen 1, 4 oder 5, zur Herstellung von Baumaterialien für den Straßen- oder Wegebau, vorzugsweise Steinen oder Platten.

7. Verwendung der Betonmischung gemäß den Ansprüchen 1, 4 oder 5 zum Straßen- oder Wegebau.

8. Beton-Bauteile, -Baumaterialien, Betonstraßen oder -wegebelag oder Betonbefestigungen für den Straßen- oder Wegebau aus ausgehärteten Betonmischungen gemäß den Ansprüchen 1, 4 oder 5.

9. Verfahren zur Herstellung von Beton-Baumaterialien und -Bauteilen jeglicher Art für den Straßen- oder Wegebau, **dadurch gekennzeichnet, dass** als Füllstoff der Aushub und/oder Füllstoffe, die im Baustellenbereich verfügbar sind, zur Herstellung der Betonmischung gemäß den Ansprüchen 1, 4 oder 5 verwendet werden.

## Claims

1. Concrete mixture for highway construction or road building containing:
i) 0,01-0,5 liter, preferably 0,05-0,15 liter of a dispersion per kilogram cement with the following composition:
a.) 83,0-96,0 wt-% (percent by weight), related to the total weight of the dispersion, water,
b.) 1,0-6,0 wt-%, related to the total weight of the dispersion, of a 30-70 wt-% aqueous, synthetic latex,
c.) if need be, 1,0-7,2 wt-%, related to the total weight of the dispersion, of an alkaline earth metal formate, preferably calcium formate,
d.) if need be, 0,2-1,2 wt-%, related to the total weight of the dispersion, of a cellulose ether,
e.) 0,02-0,12 wt-%, related to the total weight of the dispersion, lauryl-sulfonate,
f.) if need be, 0,6-1,2 wt-%, related to the total weight of the dispersion, of a commonly used preservative agent,
g.) if need be, 0,25-0,6 wt-%, related to the total weight of the dispersion, of a commonly used foam separator,
h.) if need be, 0,2-1,0 wt-%, related to the total weight of the dispersion, of a 50-60 wt-%, aqueous paraffin emulsion,
whereby the total weight of all components of the dispersion has to add up to 100 wt-%.
ii) cement
iii) filling agent and
iv) if need be, water

2. The concrete mixture according to claim 1 containing:
- 85,0-90,0 wt-% of component a,
- 2,0-5,0 wt-% of component b,
- 2,0-6,0 wt-%, of component c,
- if need be, 0,3-1,0 wt-%, of component d,
- 0,03-0,08 wt-% of component e,
- if need be, 0,8-1,0 wt-%, of component f,
- if need be, 0,3-0,5 wt-%, of component g,
- if need be, 0,5-0,8 wt-%, of component h,
whereby the total weight of all components of the dispersion has to add up to 100 wt-%.

3. The concrete mixture according to claim 1 or 2 is **characterized by** the fact that a polystyrene-butadine latex is used as a synthetic latex and as preservative agents 2-n-octyl-4-isothiazole-3-one dissolved in propyl glycol are used.

4. The concrete mixture according to claim 1, **characterized by** the fact that as a filling agent any kind of sand, any kind of soil, contaminated or not contaminated, and/or materials such as bauxite, laterite, vulcanized ash, bimos and ash from combustion plants can be used.

5. The concrete mixture according to the claims 1 or 4, **characterized by** the fact that filling agent a humid filling agent and according to the humidity content a small amount or no water at all is used.

6. Use of the concrete mixture according to the claims 1, 4 or 6, for the production of building material for highway construction or road building, preferably stones or slabs.

7. Use of the concrete mixture according to the claims 1, 4 or 6, for constructions streets and roads.

8. Concrete components, -building material, streets made of concrete or concrete road layers or concrete fastenings made of concrete mixtures, which are set already, according to the claims 1, 4 or 6.

9. Procedure for the production of concrete building material and components for highway construction or road building, **characterized by** the fact that the excavated earth and/or filling agents, which are available at the building site are used as a filling agent for the production of the concrete mixture according to the claims 1, 4 or 6.

## Revendications

1. Mélange de béton pour la construction des routes ou des chemins, contentant
i) entre 0,01 et 0,5 litre, de préférence entre 0,05 et 0,15 litre d'une dispersion par kilogramme de ciment avec la composition suivante :
a) 83,0 à 96,0 % en poids, par rapport au poids total de la dispersion, d'eau
b) 1,0 à 6,0 % en poids, par rapport au poids total de la dispersion, d'un latex synthétique aqueux avec 30 à 70 % en poids,
c) 1,0 à 7,2 % en poids, par rapport au poids total de la dispersion, d'un formiate de métal alcalino-terreux, de préférence de formiate de calcium,
d) le cas échéant entre 0,2 et 1,2 % en poids, par rapport au poids total de la dispersion, d'un éther cellulosique,
e) 0,02 à 0,12 % en poids, par rapport au poids total de la dispersion, de laurylsulfonate,
f) le cas échéant entre 0,6 et 1,2 % en poids, par rapport au poids total de la dispersion, d'un agent conservateur usuel,
g) le cas échéant entre 0,25 et 0,6 % en poids, par rapport au poids total de la dispersion, d'un agent antimoussant usuel,
h) le cas échéant entre 0,2 et 1,0 % en poids, par rapport au poids total de la dispersion, d'une émulsion aqueuse de paraffine avec 50 à 60 % en poids,
le poids total de tous les composants de la dispersion devant s'élever à 100 % en poids,
ii) du ciment
iii) de la matière de remplissage et,
iv) le cas échéant, de l'eau.

2. Mélange de béton selon la revendication 1, contentant :
• 85,0 à 90,0 % en poids du composant a,
• 2,0 à 5,0 % en poids du composant b,
• 2,0 à 6,0 % en poids du composant c,
• le cas échéant entre 0,3 et 1,0 % en poids du composant d,
• 0,03 à 0,08 % en poids du composant e,
• le cas échéant entre 0,8 et 1,0 % en poids du composant f,
• le cas échéant entre 0,3 et 0,5 % en poids du composant g,
• le cas échéant entre 0,5 et 0,8 % en poids du composant h,
le poids total de tous les composants de la dispersion devant s'élever à 100 % en poids.

3. Mélange de béton selon les revendications 1 ou 2, **caractérisé par le fait que**, en tant que latex synthétique, on utilise un latex polystyrène-butadiène et, comme agent conservateur, 2-n-octyl-4-isothiazolinone-3-one dissous dans propylène glycol.

4. Mélange de béton selon la revendication 1, **caractérisé par le fait que**, en tant que matière de remplissage, on peut utiliser toute sorte de sable, toute sorte de sol, contaminé ou non contaminé, et/ou des matières telles que la bauxite, la latérite, la cendre volcanique, la ponce et les cendres d'installations de combustion.

5. Mélange de béton selon les revendications 1 ou 4, **caractérisé par le fait que**, en tant que matière de remplissage, on utilise une matière humide de remplissage et, selon la teneur en humidité, peu ou pas d'eau.

6. Utilisation du mélange de béton selon les revendications 1, 4 ou 5, pour la fabrication de matériaux de construction pour la construction des routes ou des chemins, de préférence de pierres ou de plaques.

7. Utilisation du mélange de béton selon les revendications 1, 4 ou 5 pour la construction des routes ou des chemins.

8. Composants de construction en béton, matériaux de construction en béton, routes bétonnées ou revêtement en béton ou renforcements en béton pour la construction des routes ou des chemins en mélanges de béton durcis selon les revendications 1, 4 ou 5.

9. Procédé de fabrication de matériaux de construction en béton et de composants de construction en béton de toute sorte pour la construction des routes ou des chemins, **caractérisé par le fait que** le déblai et/ou des matières de remplissage qui sont disponibles dans la zone du chantier sont utilisés en tant que matière de remplissage pour la fabrication du mélange de béton selon les revendications 1, 4 ou 5.
